# EUROPÄISCHE PATENTSCHRIFT

(11) **EP 3 768 089 B1**
(45) Veröffentlichungstag und Bekanntmachung des Hinweises auf die Patenterteilung: **08.03.2023**
(21) Anmeldenummer: 19717229.9
(22) Anmeldetag: 19.03.2019
(51) Int. Cl.: A21C 3/02, A21C 1/00, A21C 9/08, A21C 11/10, A21C 13/00

(54) **VERFAHREN ZUR KONTINUIERLICHEN HERSTELLUNG VON BACKWAREN, INSBESONDERE BACKWAREN AUS WEIZENTEIGEN, UND VORRICHTUNG DAFÜR**
METHOD FOR CONTINUOUS PRODUCTION OF BAKED GOODS, IN PARTICULAR BAKED GOODS MADE OF WHEAT DOUGH, AND APPARATUS THEREFOR
MÉTHODE POUR LA PRODUCTION CONTINUE DE PRODUITS DE BOULANGERIE, EN PARTICULIER DES PRODUITS DE BOULANGERIE À BASE DE PÂTE DE BLÉ, ET DISPOSITIF ASSOCIÉ

(30) Priorität: 20.03.2018 DE 102018204243
(43) Veröffentlichungstag der Anmeldung: 27.01.2021
(73) Patentinhaber: Kuchenmeister GmbH, 59494 Soest (DE)
(72) Erfinder: JANK, Rüdiger, 16548 Glienicke (DE); MOHNKE, Thorsten, 44534 Lünen (DE)
(74) Vertreter: Maikowski & Ninnemann Patentanwälte Partnerschaft mbB
(86) Internationale Anmeldenummer: PCT/EP2019/056821
(87) Internationale Veröffentlichungsnummer: WO 2019/180009

(56) Entgegenhaltungen:
- US-A- 5 356 652
- US-A1- 2005 249 845
- US-A1- 2017 202 226
- Anonymous: "Exzenterschneckenpumpe - Wikipedia", , 16. Februar 2018 (2018-02-16), XP055603906, Gefunden im Internet: URL:https://de.wikipedia.org/w/index.php?t itle=Exzenterschneckenpumpe&oldid=17407786 4 [gefunden am 2019-07-09]
- RONDO Burgdorf AG: "RONDO at iba 2009 - Seeded Bread Rolls on Starline", Youtube, 26. März 2010 (2010-03-26), Seite 1 pp., XP054979511, Gefunden im Internet: URL:https://www.youtube.com/watch?v=DOHL3F QFGDQ [gefunden am 2019-07-09]
- baktec: "Fritsch lamination & pastry line / Fritsch Laminieranlage/Tourieranlage & Euroline Feigebäcklinie", Youtube, 26. März 2014 (2014-03-26), Seite 1 pp., XP054979513, Gefunden im Internet: URL:https://www.youtube.com/watch?v=t8NUbd 7hFJE [gefunden am 2019-07-09]

## Beschreibung

Die vorliegende Erfindung betrifft ein multivariables Verfahren zur kontinuierlichen Herstellung von Backwaren, insbesondere von Backwaren aus Weizenteigen, und eine Vorrichtung zur Durchführung dieses Verfahrens.

### Beschreibung

Hamburger Brötchen bilden die gebackene Grundlage von herzhaften Snacks, die mit gebratenem Hackfleisch, Wurst, Gemüse und verschiedenen pikanten Saucen gefüllt werden. Die Form der Backwaren ist entweder rund (Bun) oder länglich (Hot Dog). Die typischen Qualitätsmerkmale der Brötchen sind eine weiche Kruste und eine feinporige Krume. Ursprungsland dieser Gebäckart ist die USA. Der Name "Hamburger" beruht auf einer typischen Brötchenform, die im 19. Jahrhundert als kostengünstiges Lebensmittel unter den Hafenarbeitern im Hamburger Hafen beliebt war.

Als Grundlage für Snacks wurde die Rezeptur abgewandelt und die Herstellung in den letzten Jahrzehnten industrialisiert. Dafür wurde ein technologisches Verfahren entwickelt, bei dem der Teig in einem Batchkneter oder kontinuierlichem Kneter hergestellt, anschließend zu einer Portionieranlage gepumpt und in Teigstücke mechanisch geteilt wird.

Der Teig unterliegt während der Verarbeitung einer hohen mechanischen Belastung. Um diese Belastung zu kompensieren werden Weizenmehle mit einem hohen Anteil der Proteinfraktionen Gliadin und Glutenin und Backmittel, bestehend aus Emulgatoren und Enzymen, verwendet. Das damit hergestellte Produkt entspricht exakt den spezifischen Qualitätsanforderungen an ein Bun.

Die Struktur und Textur von Buns und Hot-Dog-Brötchen sind für Backwaren aus Hefeteigen wie Croissants, Brioches, Brötchen, Ciabatta usw. untypisch. Aus diesem Grund sind die Herstellungslinien für Buns und Hot-Dogs Monolinien. Eine flexible Anwendung dieser Technologie für unterschiedliche Backwaren mit differenzierten Qualitätsmerkmalen ist mit dem bekannten Herstellungsverfahren nicht möglich.

Für die industrielle Herstellung von Weizenteigen wurden in den letzten Jahrzehnten Liniensysteme entwickelt, die Weizenteige schonend zu Teigbändern formen, laminieren, die Teigstärke reduzieren, mit Füllkomponenten beaufschlagen und die Teigstücke auf die gewünschte Portionsgröße durch Schneidevorrichtungen portionieren. Mit diesen Linien wird ein breites Sortiment an süßen und ungesüßten Weizenteigprodukten hergestellt. Dazu zählen Brioches, Schnecken, Ciabatta, Schnittbrötchen, Berliner, Donuts, Croissants, Brioches und Toastbrot. Durch die schonende Teigverarbeitung und reduzierten Scherkräfte werden Hefeteigprodukte in handwerklicher Qualität hergestellt.

Die Produktion von Buns und Hot-Dogs ist mit dieser Technologie nicht möglich. Buns, die mit dieser Technologie hergestellt werden, haben unterschiedliche Porengröße und Blasen auf der Gebäckoberfläche. Die technologische Trennung der verschiedenen Gebäckarten ist jedoch ungünstig und unökonomisch. Es ist vielmehr wünschenswert, eine Fertigungslinie für eine Vielzahl von Gebäckarten zu verwenden.

Entsprechend bestand eine Aufgabe der vorliegenden Erfindung darin, ein Verfahren bereitzustellen, welches die Herstellung von Weizengebäck mit unterschiedlichen Texturen und in unterschiedlichen Formaten und Größen im Wesentlichen in einer Fertigungslinie ermöglicht, wobei lediglich geringfügige Anpassungen notwendig sind.

US 2017/202226 A1 offenbart ein Verfahren zur kontinuierlichen Herstellung von Backwaren und eine Anlage zur Durchführung dieses Verfahrens gemäß dem Stand der Technik.

Diese Aufgabe wird erfindungsgemäß mit einem Verfahren mit den Merkmalen des Anspruchs 1 gelöst.

Entsprechend wird ein Verfahren zur kontinuierlichen Herstellung von Backwaren, insbesondere Backwaren aus Weizenteigen, bereitgestellt, welches die folgenden Schritte umfasst:
a) Herstellen von mindestens einem Teig in mindestens einer Knetvorrichtung;
b) Eintragen des mindestens einen Teiges aus der Knetvorrichtung in mindestens einen Depolymerisator umfassend mindestens eine Förderschnecke und mindestens eine Exenterschneckenpumpe zur Depolymerisation und Entgasung des Teiges;
   wobei es durch Einsatz von Enzymen, insbesondere einer Glucoseoxidase, zu einer Regenerierung des Glutennetzwerkes nach der Depolymerisation während der weiteren Verarbeitung kommt und wobei durch unterschiedliche Scherung im Depolymerisator die Scherkräfte der Mehlqualität angepasst werden;
c) Eintragen des depolymerisierten Teiges in mindestens einen Teigbandformer unter Ausbildung eines Teigbandes (bei gleichzeitiger Rekonstruierung der Teigstruktur);
d) Falten des Teigbandes (Laminierung);
e) Einführen des gefalteten (laminierten) Teigbandes in mindestens eine Walzvorrichtung zur Reduzierung der Teigstärke, insbesondere durch eine Kombination von Walzen;
f) Schneiden des Teigbandes unter Verwendung von mindestens einer Schneidvorrichtung in eine Anzahl von Teiglingen;
g) optional Flachwalzen der Teiglinge;
h) Ablegen der Teiglinge auf Backblechen oder in Backformen ;
i) Gärung der Teiglinge; und
j) Backen der Teiglinge.

Das vorliegende Verfahren ermöglicht die Verwendung einer nur geringfügig anzupassenden Fertigungslinie zur Herstellung von Weizengebäck mit unterschiedlicher Struktur und Größe. Die Erfindung basiert im Wesentlichen auf einer Erweiterung der Technologie durch einen zusätzlichen Verfahrensschritt. Erfindungsgemäß werden die Teige einem Depolymerisator zugeführt, der aus einer separaten Förderschnecke, die mit einer Exenterschneckenpumpe verbunden ist, besteht.

Durch die untypische Beanspruchung der Teige, erfolgt eine Depolymerisation der Glutenstruktur und eine zusätzliche Entgasung bereits vorhandener Lufteinschlüsse. Die vorhandenen Gaskeime werden nicht völlig eliminiert, sondern verkleinert. Die plastischen Eigenschaften der Teige werden verstärkt und damit das Fließverhalten verbessert. Durch den Einsatz von Enzymen wie Glucoseoxidase kommt es zu einer Regenerierung des Glutennetzwerkes nach der Depolymerisation während der Verarbeitung auf der Laminieranlage. Durch unterschiedliche Scherung im Depolymerisator werden die Scherkräfte der Mehlqualität angepasst.

Auch wird die Laminieranlage für die Teigverarbeitung mit zusätzlichen Aggregaten wie Wirkkanälen, Produktstopper, Andrückwalze und Positionierbänder ausgerüstet. Dadurch besteht die Möglichkeit mit der Verfahrenserweiterung Backwaren aus hefegelockerten Weizenteigen unterschiedlicher Gebäckstruktur mit einer Produktionsanlage herzustellen.

Wie oben angeführt, werden die Rohstoffe in einem ersten Schritt zunächst einer Knetvorrichtung zugeführt. Hierzu werden zur Bildung des Teiges bzw. der Teigphase in der Knetvorrichtung teigbildende Rohstoffe in die Knetvorrichtung eingeführt. Die verwendete Knetvorrichtung kann ein kontinuierlicher Kneter oder ein Batchkneter sein.

Teigbildende Rohstoffe, die in die Knetvorrichtung eingeführt werden, umfassen insbesondere Wasser, Hefe und Trockensubstanz, wie Mehl, Emulgatoren und ggf. geringe Mengen an Zucker. Des Weiteren können teigbelastende Rohstoffe in die Teigphase eingeführt. Unter teigbelastenden Rohstoffen werden vorliegend insbesondere Fette, Öle, Aromastoffe, Zucker, Glycerin und Ähnliches verstanden. Die zugegebene Menge an Enzymen liegt zwischen 5 und 150 ppm, bevorzugt zwischen 10 und 100 ppm.

Die Teigtemperatur in der Knetvorrichtung liegt insbesondere in einem Temperaturbereich zwischen 20 und 35 °C, bevorzugt zwischen 22 und 30 °C, ganz besonders bevorzugt 24 bis 29 °C, jeweils in Abhängigkeit des herzustellenden Teiges. Der Durchsatz der Knetvorrichtung wird durch die Einstellung der Drehzahl bestimmt. Dabei ergeben unterschiedliche Knetintensitäten unterschiedliche Gebäckstrukturen.

Wie oben angeführt, wird der geknetete Teig in einen Depolymerisator überführt, die aus mindestens einer Förderschnecke und mindestens einer Exenterschneckenpumpe besteht. Es kann sich um eine Doppel- oder Dreifachschnecke handeln, mit einer Schneckenlänge zwischen 500 bis 1500 mm, bevorzugt 600 bis 1000mm, und mit einer Steigung zwischen 50 bis 300 mm, bevorzugt 80 bis 200 mm. Die Drehzahl liegt bei 5 bis 50 U/min, bevorzugt 7 bis 30 U/min. Die Verweilzeit des gekneteten Teiges in der Depolymerisationsvorrichtung beträgt zwischen 1 bis 10 min, bevorzugt 2 bis 5 min.

Nach Depolymerisation und Entgasung des Teiges im Depolymerisator wird der Teig mit einer Exenterschneckenpumpe z.B. über eine Rohrleitung zum Teigbandformer gefördert. Der Teigbandformer ist in Form einer Trichtervorrichtung ausgebildet und verfügt an bzw. unterhalb der Trichteröffnung über mindestens ein Walzenpaar, bevorzugt zwei oder drei Walzenpaare. Die Teigmasse wird durch den Trichter und das mindestens eine Walzenpaar senkrecht bzw. vertikal als homogen geformtes Teigband auf ein zweites, horizontal laufendes Transportband abgelegt.

Alternativ kann der Teig portioniert werden und die portionierten Teigstücke werden vertikal gefördert und auf einem Transportband überlappend abgelegt.

In einer Ausführungsform kann an diesem zweiten Transportband mindestens eine (erste) Walzvorrichtung vorgesehen. Die Walzvorrichtung umfasst bevorzugt ein Walzwerk mit obenund untenliegender motorisch betriebener Walze. Es ist auch möglich ein Walzwerk mit mehreren auf einer kreisförmigen oder elliptischen Bahn laufenden Walzen einzusetzen.

In dieser mindestens einen (ersten) Walzvorrichtung kann das Teigband bevorzugt auf eine Dicke von 2 bis 30 mm, bevorzugt 3 bis 20 mm, insbesondere 5 bis 10 mm gewalzt werden. Die Teigstärke des Teigbandes nach Verlassen der Walzvorrichtung wird insbesondere durch das gewünschte Endprodukt bestimmt.

Das Teigband wird anschließend zum Falten in Schritt d) von dem zweiten Transportband auf ein drittes Transportband überführt. In einer Ausführungsform wird das Teigband zum Zwecke des Faltens auf ein vertikal oder rechtwinklig zum zweiten das Teigband transportierende Transportband angeordnetes weiteres drittes Transportband in Laufrichtung des dritten Transportbandes aufgebracht. Hierbei kann beim Übergang des Teigbandes von dem zweiten Transportband auf das dritte Transportband das Teigband quer zur Laufrichtung des dritten Transportbandes gefaltet werden. Dies kann z. B. durch ein rechtwinkliges mehrschichtiges Ablegen des Teigbandes erfolgen. Das Teigband wird mit einer sehr geringen Fallhöhe dabei übereinandergelegt oder laminiert, um die Bearbeitung mit Hand zu simulieren und dabei die Stabilität der Teigstruktur zu erhöhen. Das Teigband wird in drei bis sechs Schichten laminiert.

In einer weiteren Ausführungsform des vorliegenden Verfahrens wird das gefaltete Teigband in mindestens einer (zweiten) Walzvorrichtung in Schritt e) auf eine abschließende Teigstärke bzw. Teigbanddicke von 2 bis 20 mm, bevorzugt 2 bis 10 mm gewalzt. Dabei ist die in der (zweiten) Walzvorrichtung einzustellende Teigdicke wiederum abhängig von der Art der gewünschten Backform. Die abschließende Teigstärke kann z. B. für einen Bun bei 2-4 mm liegen und für ein Hot-Dog-Brötchen bei 8-10 mm liegen.

Diese (zweite) Walzvorrichtung ist insbesondere in Form eines Walzwerkes mit z.B. 8-12 in einer elliptischen Bahn laufenden Walzen oder Schlichtwerken (Kalibrierkopf mit Walzentrommel) ausgebildet, wobei mehrere z.B. drei Schlichtwerke hintereinander angeordnet sein können. Auch ist die Anwendung eines Mehrwalzensystems möglich.

Die Teigbänder weisen nach dem zweiten Walzvorgang typischerweise eine Breite zwischen 200 bis 900, bevorzugt zwischen 300 bis 600 mm auf.

Nach erneutem Walzen des Teigbandes wird dieses unter Verwendung einer Schneidvorrichtung in Schritt f) in eine Anzahl von Teiglingen in Längs- und Querrichtung geschnitten. Das Schneiden des Teigbandes erfolgt bevorzugt unter Verwendung einer Schneidwalze und Guillotine.

Während des Schneidprozesses erfolgt zunächst ein Schneiden der Teigbänder in Längsrichtung, und ggf. anschließend in Querrichtung (wie im Falle von Hot-Dog-Brötchen).

In einer bevorzugten Ausführungsform, insbesondere zur Herstellung von Buns umfasst der Schritt f) des Schneidens des Teigbandes folgende Unterschritte:
f1) Längsschneiden des Teigbandes in eine Anzahl von schmalen Teigbändern, d.h. das Teigband wird hier in Transportrichtung geschnitten;
f2) Einrollen des Teigbandes (d.h. der schmalen Teigbänder); und
f3) Querschneiden der eingerollten Teigbänder in eine Anzahl von Teiglinge.

Das Aufrollen der Teigbänder kann z.B. durch den Einsatz von konischen Rolle vorgenommen werden. Nach dem Aufrollen erfolgt bevorzugterweise eine Verdichtung der Rollen unter Verwendung eines Druckbandes.

Eine Separierung bzw. Auftrennung der geschnittenen Teiglinge wird bevorzugt durch unterschiedliche Bandgeschwindigkeiten der verwendeten Transportbänder bewirkt, wobei durch das Auftrennen der geschnittenen Teigbänder in die Einzelstücke mit unterschiedlicher Größe die unterschiedlichen finalen Gebäckgrößen bestimmt werden.

Nach dem Schritt des Schneidens und Vereinzelns der Teigbänder in eine Anzahl von Teiglingen können die geschnittenen Teiglinge in einem weiteren optionalen Schritt f4) auf ein weiteres Transportband überführt werden, wobei auf dem Transportband in einem Winkel zur Laufrichtung des Transportbandes Wirkkanäle ausgebildet sind, wobei eine Rundformung der Teiglinge in den Wirkkanälen bewirkt wird.

Die auf bzw. an dem Transportband vorgesehenen Wirkkanäle sind rinnenförmig seitlich offen ausgebildet. Jeder Wirkkanal wird durch zwei metallische Schienen ausgebildet und begrenzt. Der Winkel (α1; α2) der Wirkkanäle zur Laufrichtung des Transportbandes beträgt bevorzugt zwischen 20 und 60°, bevorzugt 40 und 50°, insbesondere bevorzugt 45 und 48°. Jeder Wirkkanal ist zu dem entlang des Transportbandes in mindestens zwei Abschnitte unterteilt: Der erste Abschnitt des Wirkkanals verläuft auf dem Transportband in einem Winkel α1 schräg zur Laufrichtung des Transportbandes. Nach einer vorbestimmten Distanz knickt der erste Abschnitt des Wirkkanals in einem Winkel β ab und geht in den zweiten Abschnitt des Wirkkanals über; d.h. erster und zweiter Abschnitt eines jeden Wirkkanales sind V-förmig zueinander angeordnet, wobei erster und zweiter Abschnitt des Wirkkanals in einem Winkel β aufeinandertreffen. Der zweite Abschnitt verläuft auf dem Transportband in einem Winkel α2 schräg zur Laufrichtung des Transportbandes, wobei a1 gleich a2 ist.

Durch die Wirkkanäle wird der Transportbewegung des Transportbandes und damit der Linearbewegung der auf dem Transportband abgelegten Teiglinge eine geringfügig vertikale Bewegung entgegengesetzt. Lineare und vertikale Bewegung überlagern sich, wodurch ein rundgewirktes Teigstück erhältlich ist. Durch die V-förmige Anordnung des ersten und zweiten Abschnitts der Wirkkanäle erfolgt zunächst eine vertikale Bewegung im ersten Abschnitt in eine erste Richtung und im zweiten Abschnitt in eine zweite (entgegengesetzte) Richtung, so dass unterschiedliche Schubkräfte auf das Teigstück bzw. den Teigling einwirken. Aufgrund der linearen Vorwärtsbewegung des Transportbandes und der winkligen Anordnung der Wirkkanäle auf dem Transportband wird der Teigling entlang der Wände der Wirkkanäle vorwärts bewegt, wobei gleichzeitig aufgrund der schrägen Anordnung der Wirkkanalwände eine vertikale Bewegung auf die Teiglinge ausgeübt wird. Hierdurch wird ein Rollen der Teiglinge entlang der Wirkkanalwände hervorgerufen, was wiederum eine Rundformung der Teiglinge bewirkt. Durch die V-förmige Anordnung der Wirkkanäle bei gleicher Winkeleinstellung wird zudem die Ausgangsposition der Teiglinge auf der Linie wieder hergestellt.

Die im Schritt des Einrollens der Teiglinge und der Formgebung der Teiglinge verwendeten Module, wie Führungsschienen (Wirkkanäle) und Einrollvorrichtungen, sind austauschbar, so dass eine einfache Anpassung des Herstellungsverfahrens an die gewünschte Backware leicht möglich ist.

Nach Verlassen der Wirkkanäle wird in einer weiteren Ausführungsform des Verfahrens die Dicke der rundgeformten Teiglinge durch Flachwalzen reduziert (Schritt h). Die rundgeformten Teiglinge, die für die Herstellung von Buns verwendet werden, wird die Teigdicke auf eine Endstärke zwischen 2 und 5 mm reduziert.

Die Teiglinge, die zur Herstellung von Hot-Dog-Brötchen verwendet werden, werden durch Längsschneiden des Teigbandes gemäß Schritt f1), Querschneiden gemäß Schritt f3), und anschließendes Flachwalzen der abgelegten Teiglinge gemäß Schritt g) auf eine Endstärke zwischen 8 - 10 mm erhalten. Im Falle der Herstellung der Hot-Dog-Brötchen entfallen somit das Einrollen der Teigbänder gemäß Schritt f2), und das Überführen der geschnittenen Teiglinge in Wirkkanäle gemäß Schritt f4).

Im weiteren Verlauf des Verfahrens werden die geformten Teiglinge in Schritt h) auf Backformen oder Backblechen abgesetzt. Die zum Einsatz kommenden Backbleche weisen bevorzugt eine quadratische Fläche auf, so dass eine einfache Steuerung des Transportes ermöglicht wird. Besonders bevorzugt ist die Verwendung eines Backbleches mit einer Fläche von mindestens einem Quadratmeter, um einen ruhigen Ablauf mit geringen Taktzahlen zu ermöglichen. Zudem ermöglicht eine quadratische Fläche des Backbleches eine prozessabhängige Drehung der Backblechformen bzw. des Backbleches unter Nutzung standardisierter, austauschbarer Transportstrecken. Die zum Einsatz kommenden Backformen weisen bevorzugt ein konstantes Verhältnis der Seitenflächen zueinander auf, d. h. die Backformen sind mit einem vorgegebenen Modulmaß vorgegeben. Das konstante Verhältnis der Seitenflächen und das vorgegebene Modulmaß ermöglichen den Transport, Beladung und Entladung der Backformen mit den gleichen Systemen.

Die sich in Schritt i) anschließende Gärung der rundgeformten Teiglinge erfolgt in einer Variante bei Gärtemperaturen zwischen 30 und 35°C, bevorzugt zwischen 32 und 34°C, wobei die Gärzeit zwischen 30 und 120 min, bevorzugt 45 und 115 min, insbesondere bevorzugt zwischen 50 und 100 min beträgt.

Die relative Luftfeuchte kann während der Gärung in der offenen Backform zwischen 75 und 95 %, bevorzugt zwischen 80 und 90 %, insbesondere bevorzugt zwischen 85 und 88% betragen.

Gärtemperatur, Gärzeit und relative Luftfeuchte während des Gärungsprozesses sind insbesondere abhängig von der Teigzusammensetzung; z. B. erfordert ein Teig für Buns eine Gärtemperatur von 32 °C, eine Gärzeit von 70 min und eine relative Luftfeuchte von 85%.

Nach dem Gärprozess können die Teiglinge in einem optionalen Schritt i1) mit Saaten bestreut werden und/oder mit Proteinmischungen besprüht werden.

Das Backen der Teiglinge in Schritt j) kann bei Temperaturen zwischen 150 und 250 °C, bevorzugt zwischen 180 und 240 °C, insbesondere bevorzugt zwischen 200 und 220 °C erfolgen. Bevorzugterweise weist der zum Einsatz kommende Backofen eine während des Durchlaufs der Teiglinge durch den Ofen graduell abnehmende Ofentemperatur auf. So kann die Ofentemperatur am Beginn (d. h. Eintritt der ungebackenen Teiglinge in den Ofen) zwischen 200 und 240 °C betragen und am Ende der Backzone (d. h. Austritt der gebackenen Teiglinge aus dem Ofen) zwischen 180 und 200 °C betragen.

In einer Ausführungsform des Schrittes j) beträgt die Backzeit zwischen 5 und 35 min, bevorzugt zwischen 6 und 30 min, insbesondere bevorzugt zwischen 7 und 15 min, ganz besonders bevorzugt zwischen 8 und 12 min in Abhängigkeit des zu backenden Teiges und/oder Teiggewichtes.

Auch wird in einer Ausführungsvariante des vorliegenden Verfahrens eine Konvektion im Backofen in Abhängigkeit des zu backenden Produktes eingesetzt. So können bei bestimmten Backwaren eine vertikale Konvektion von der Ofenunterseite und/oder eine horizontale oder auch vertikale Konvektion auf die Oberfläche der zu backenden Teiglinge überhaupt nicht, nur zu Beginn der Backzeit oder während der gesamten Backzeit wünschenswert sein. Auch ist es möglich, eine eingeschränkte Konvektion von z. B. 20 bis 80 %, bevorzugt 40 bis 60 % einzusetzen. Insbesondere ist es bevorzugt, eine Konvektion von 30 bis 60 % zu Beginn der Backzeit anzuwenden.

Insgesamt stehen im vorliegenden Verfahren im Backprozess vier Möglichkeiten der Wärmeübertragung zur Verfügung: Leitung, Konvektion, Strahlung und/oder Kondensation. Der Backofen weist bevorzugt mehrere verschiedene Backzonen, z.B. bis zu zwölf verschiedene Backzonen auf. Die Strömungsrichtung der Wärmeluft in den Backzonen ist bevorzugt so gestaltet, dass durch die vertikale Strömungsrichtung der Eintrag von Falschluft verhindert wird.

Der Backprozess kann je nach Gebäckart unter 100 % Auslastung der Backfläche oder unter weniger als bis zu 50 % unterhalb der Kapazität des Backofens liegende Auslastung ablaufen, d.h. der Backofen kann mit unterschiedlichen Auslastungsgraden betrieben werden. Um eine gleichmäßige Übertragung der Energie zu ermöglichen, wird eine entsprechende Steuerung der Wärmeübertragung genutzt. Als Energieträger wird vorzugsweise Thermoöl verwendet, das eine exaktere Lückenabsenkung ermöglicht. Durch die wahlweise Zuschaltung von vertikalen und horizontalen Turbulenzen kann mittels der bereits erwähnten Konvektion der Energieeintrag poduktspezifisch exakt geregelt werden. Ein wesentlicher Vorteil des vorliegenden Verfahrens besteht darin, dass die üblicherweise notwendige Verwendung von zwei unterschiedlichen Öfen bei Verwendung von unterschiedlichen Backwarenteigen entfällt. Das vorliegende Verfahren kennzeichnet sich insbesondere durch seine Variabilität und Flexibilität aus. So können mit dem vorliegenden variablen System unterschiedliche Produkte mit variablen Prozessstufen und variierenden technologischen Bausteinen (Modulen) hergestellt werden.

Auch erlaubt das vorliegende System und Verfahren eine Kopplung der Module des Backsystems mit einem zweiten parallelen (Schwester)System, wodurch ein redundantes Fabriksystem entsteht.

Gegenstand der vorliegenden Erfindung ist ebenfalls eine Vorrichtung zur kontinuierlichen Herstellung von Backwaren aus Weizenteigen in einem oben beschriebenen Verfahren.

Entsprechend umfasst die vorliegende Vorrichtung
- mindestens eine Knetvorrichtung zur Herstellung eines Teiges;
- mindestens einen Depolymerisator umfassend mindestens eine Förderschnecke und mindestens eine Exenterschneckenpumpe zur Depolymerisation des Teiges;
- mindestens ein Teigbandformer zur Ausbildung eines Teigbandes;
- mindestens ein Transportband zur Überführung des Teigbandes auf ein weiteres Transportband, wobei das Teigband während des Überführens von dem einen Transportband auf das weitere Transportban gefaltet (laminiert) wird;
- mindestens eine Walzvorrichtung zur Reduzierung der Teigstärke des gefalteten Teigbandes;
- mindestens eine Schneidvorrichtung zum Schneiden des Teigbandes in eine Anzahl von Teiglinge;
- optional mindestens ein weiteres Transportband mit an dem Transportband vorgesehenen Wirkkanälen;
- mindestens eine Vorrichtung zum Bestücken von Backblechen und/oder Backformen mit den geformten (rundgeformten oder länglichen) Teiglingen;
- optional mindestens eine Andrückrolle zur Reduzierung der Teigstärke;
- mindestens eine Gärvorrichtung; und
- mindestens einen Backofen zum Backen der Teiglinge.

Hinsichtlich der Einzelheiten der singulären Vorrichtungsbestandteile wird auf die entsprechende Beschreibung der Verfahrensschritte verwiesen.

Die vorliegende Erfindung wird nachfolgend unter Bezugnahme auf die Figuren an einem Ausführungsbeispiel näher erläutert. Es zeigen:
- Figur 1: eine schematische Darstellung der Verfahrensschritte einer Ausführungsform des erfindungsgemäßen Verfahrens; und
- Figur 2: eine schematische Darstellung einer Ausführungsform von Wirkkanälen.

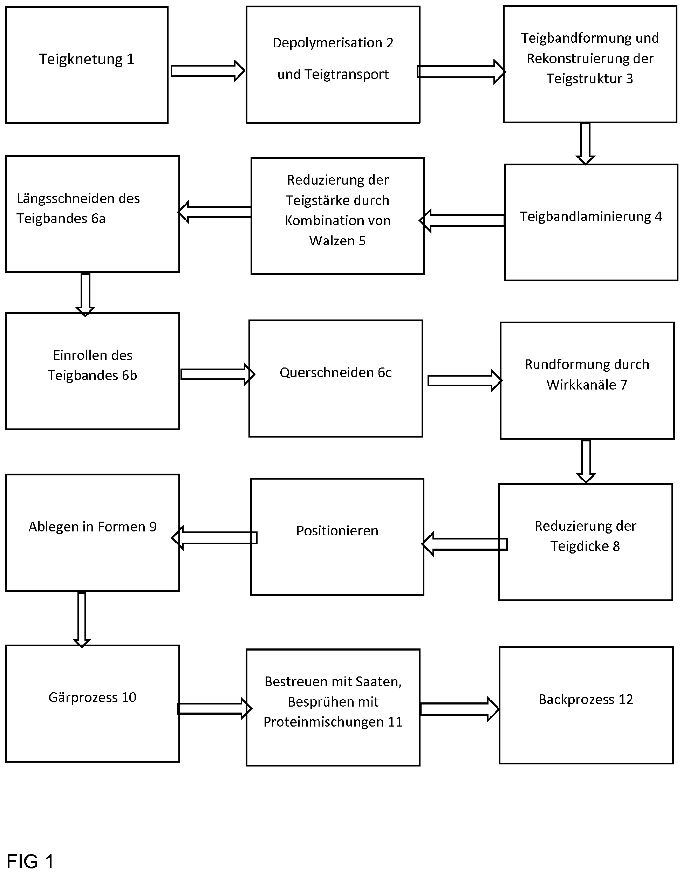

Figur 1 zeigt eine schematische Übersicht einer Ausführungsform des vorliegenden Verfahrens, wobei in einem Kneter (1), z.B. einem Batchkneter eine Teigphase aus teigbildenden Rohstoffen, wie Weizenmehl, Wasser und/oder Hefe hergestellt wird.

Nach einem vorbestimmten Zeitraum und Energieeintrag des Knetens, der in Abhängigkeit der gewünschten Backware variieren kann, wird die Teigphase aus dem Kneter (1) in einen Depolymerisator (2) überführt. Der Depolymerisator (2) umfasst eine separate Förderschnecke, die mit einer Exenterschneckenpumpe verbunden ist. Durch die untypische Beanspruchung der Teige in diesem Schritt, erfolgt eine Depolymerisation der Glutenstruktur und eine zusätzliche Entgasung bereits vorhandener Lufteinschlüsse. Die vorhandenen Gaskeime werden nicht völlig eliminiert, sondern verkleinert. Die plastischen Eigenschaften der Teige werden verstärkt und damit das Fließverhalten verändert. Durch den Einsatz von Enzymen wie Glucoseoxidase kommt es zu einer Regenerierung des Glutennetzwerkes nach der Depolymerisation während der Verarbeitung auf der Laminieranlage. Durch unterschiedliche Scherung im Depolymerisator werden die Scherkräfte der Mehlqualität angepasst.

Die den Depolymerisator (2) verlassene Teigphase wird über eine Rohrleitung in einen Teigbandformer (3) mit Trichtervorrichtung und Walzenpaaren eingeführt. Der Teigbandformer (3) bedingt die Bildung eines homogenen Teigbandes, welches auf einem Transportband abgelegt wird.

Dieses Transportband ist Teil einer Teigausrollanlage, die mit einer linear angeordneten Walze als (erster) Walzvorrichtung versehen ist. Vor der Walzvorrichtung beträgt die Dicke des auf das Transportband abgelegten Teigbandes z. B. 40 mm. Die erste Walzvorrichtung kann z. B. aus einem Abwalzwerk oder Multiwalzensystems bestehen, das mit oben- und untenliegender motorisch betriebener Walze ausgestattet ist, und ermöglicht ein Walzen des Teigbandes auf eine Teigstärke bzw. Teigdicke von 30 mm und weniger in Abhängigkeit des gewünschten Backproduktes. So liegt die Teigstärke des Teigbandes nach Verlassen der Walzvorrichtung im Falle der Herstellung von Buns und von Hot Dog Brötchen zwischen 2 und 8 mm.

Nach Verlassen der Walzvorrichtung des Teigbandes auf einem weiteren Transportband erfolgt ein Faltvorgang des Teigbandes, der auch als Teigbandlaminierung (4) beschrieben werden kann, Hierbei erfolgt ein Falten des Teigbandes vertikal zur Laufrichtung des Transportbandes. Das gewalzte Teigband wird auf ein vertikal zum Transportband angeordnetes weiteres, nächstes Transportband aufgebracht und beim Übergang vom dem einen Transportband zum nächsten Transportband rechtwinklig mehrschichtig abgelegt oder laminiert. Hierdurch wird die Stabilität der Teigstruktur erhöht. Die Teigstärke wird um das 10-30fache erhöht.

Das gefaltete, laminierte Teigband unterliegt einem weiteren Scher- bzw. Walzprozess (5) in einer weiteren (zweiten) Walzvorrichtung, die aus einem Mehrwalzensystem und Schlichtwerk besteht. In dieser Walzvorrichtung erfolgt eine Scherung bzw. Walzung des gefalteten Teigbandes auf eine Teigstärke von 2 mm und darüber, wiederum in Abhängigkeit vom gewünschten Backprodukt. So liegt die Teigstärke nach Verlassen der (zweiten) Walzvorrichtung für ein Bun bei 2mm und für ein Hot Dog Brötchen bei 5mm.

Nach Reduzierung der Teigstärke in der (zweiten) Walzvorrichtung (5) und Ablegen des gewalzten Teigbandes auf einem weiteren Transportband erfolgt ein Schneiden des Teigbandes in Längs- und Querrichtung unter Verwendung von mindestens zwei Schneidvorrichtungen.

Hierbei wird das Teigband zuerst in Längsrichtung (d. h. in Laufrichtung des Teigbandes) in parallel laufende Teigbänder geschnitten (6a) und anschließend die parallel laufenden Teigbänder (in der Herstellung von Buns) eingerollt (6b). Anschließend werden die eingerollten Teigbänder in Querrichtung geschnitten (6c). Im Falle der Hot-Dog Brötchen erfolgt kein Einrollen der geschnittenen Teigbänder gemäß (6b) sondern ein Schneiden in Läng- und Querrichtung gemäß (6a) und (6c).

Nach dem Schritt des Schneidens (6a-6c) und Vereinzeln der Teigbänder werden die geschnittenen Teiglinge auf ein weiteres Transportband überführt, wobei auf dem Transportband in einem Winkel zur Laufrichtung des Transportbandes Wirkkanäle ausgebildet sind, wobei im Falle der Bun-Herstellung eine Rundformung der Teiglinge in den Wirkkanälen bewirkt wird (7).

Die auf bzw. an dem Transportband vorgesehenen Wirkkanäle sind rinnenförmig seitlich offen ausgebildet.

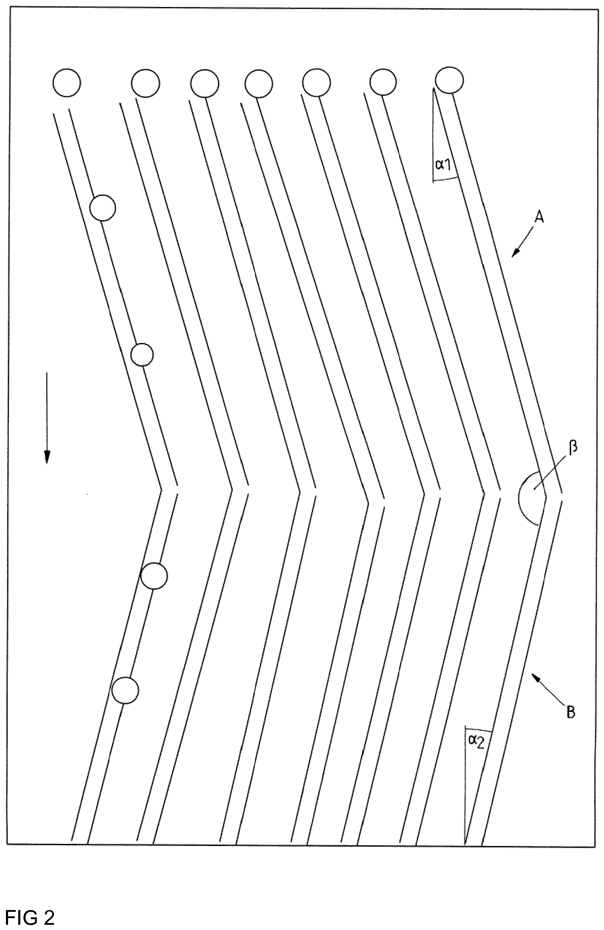

Wie in Figur 2 angedeutet wird jeder Wirkkanal durch zwei Schienen ausgebildet und begrenzt. Der Winkel (α1; α2) der Wirkkanäle zur Laufrichtung des Transportbandes beträgt 45°. Jeder Wirkkanal ist zu dem entlang des Transportbandes in mindestens zwei Abschnitte A, B unterteilt: Der erste Abschnitt A des Wirkkanals verläuft auf dem Transportband in einem Winkel α1 schräg zur Laufrichtung des Transportbandes. Nach einer vorbestimmten Distanz knickt der erste Abschnitt des Wirkkanals in einem Winkel β ab und geht in den zweiten Abschnitt B des Wirkkanals über; d.h. erster und zweiter Abschnitt eines jeden Wirkkanales sind V-förmig zueinander angeordnet, wobei erster und zweiter Abschnitt des Wirkkanals in einem Winkel β aufeinandertreffen. Der zweite Abschnitt verläuft auf dem Transportband in einem Winkel α2 schräg zur Laufrichtung des Transportbandes, wobei a1 gleich a2 ist. Aufgrund der linearen Vorwärtsbewegung des Transportbandes und der winkligen Anordnung der Wirkkanäle auf dem Transportband wird der Teigling entlang der Wände der Wirkkanäle vorwärts bewegt, wobei gleichzeitig aufgrund der schrägen Anordnung der Wirkkanalwände eine vertikale, rotierende Bewegung auf die Teiglinge ausgeübt wird. Hierdurch wird ein Rollen der Teiglinge entlang der Wirkkanalwände hervorgerufen, was wiederum eine Rundformung der Teiglinge bewirkt.

Nach Positionieren und Ablegen der rundgeformten Teiglinge in den entsprechenden Backformen bzw. auf Backblechen (9) erfolgt der Gärungsprozess (10) bei variierenden Gärtemperaturen, die in Abhängigkeit der gewünschten Backware gewählt werden.

Nach dem Gärungsprozess können die Teiglinge mit Saaten (z.B. Sesam) bestreut werden oder mit Proteinmischungen besprüht werden (11).

Die Teiglinge werden dem Backofen zugeführt und für einen vorbestimmten Zeitraum, der abhängig ist von der gewünschten Backware, gebacken (12).

Die Backwaren werden gekühlt und anschließend verpackt.

In der folgenden Tabelle sind die Parameter für Verfahren zur Herstellung von Buns und Hot Dog Brötchen, die mit diesem Verfahren gewonnen werden zusammenfassend dargestellt.

| **Parameter** | **Buns** | **Hot Dog Brötchen** |
|---|---|---|
| Teigtemperatur Kneter | 28°C | 28°C |
| Leistung Kneter | 50Hz | 50Hz |
| Spaltbreite Schlichtwerk 1 | 5mm | 8mm |
| Spaltbreite Schlichtwerk 2 | 2mm | 5mm |
| Gärtemperatur | 32°C | 32°C |
| Gärzeit | 70min | 60 min |
| Relative Luftfeuchte (Gärung) | 85% | 85% |
| Backzeit | 9min | 9min |
| Ofentemperatur | 210°C | 210°C |
| Vertikale Konvektion von unten | 60% der Backzeit | 50% der Backzeit |
| Horizontale Konvektion auf die Gebäckoberfläche | Zu Beginn der Backzeit | Zu Beginn der Backzeit |

## Patentansprüche

1. Verfahren zur kontinuierlichen Herstellung von Backwaren, insbesondere Backwaren aus Weizenteigen, umfassend die Schritte:
a) Herstellen von mindestens einem Teig in mindestens einer Knetvorrichtung (1);
b) Eintragen des mindestens einen Teiges aus der Knetvorrichtung (1) in mindestens einen Depolymerisator (2) umfassend mindestens eine Förderschnecke und mindestens eine Exzenterschneckenpumpe zur Depolymerisation und Entgasung des Teiges; wobei es durch Einsatz von Enzymen, insbesondere einer Glucoseoxidase, zu einer Regenerierung des Glutennetzwerkes nach der Depolymerisation während der weiteren Verarbeitung kommt und wobei durch unterschiedliche Scherung im Depolymerisator die Scherkräfte der Mehlqualität angepasst werden;
c) Eintragen des depolymerisierten Teiges in mindestens einen Teigbandformer (3) unter Ausbildung eines Teigbandes;
d) Falten des Teigbandes (4);
e) Einführen des gefalteten Teigbandes in mindestens eine Walzvorrichtung (5),
f) Schneiden des Teigbandes (6) unter Verwendung von mindestens einer Schneidvorrichtung in eine Anzahl von Teiglingen;
g) optional Flachwalzen der Teiglinge;
h) Ablegen der geformten Teiglinge auf Backblechen oder in Backformen (9);
i) Gärung der Teiglinge (10); und
j) Backen der Teiglinge (12).

2. Verfahren nach Anspruch 1, **dadurch gekennzeichnet, dass** in Schritt c) der den mindestens einen Depolymerisator (2) verlassene Teig in den mindestens einen Teigbandformer (3) über eine Rohrleitung In den Trichter des Teigbandformers gefördert wird und das gebildete Teigband auf ein Transportband aufgebracht wird.

3. Verfahren nach einem der vorhergehenden Ansprüche, **dadurch gekennzeichnet, dass** das Teigband zum Falten in Schritt d) auf ein rechtwinklig zu dem das Teigband transportierende Transportband angeordnetes weiteres Transportband in Laufrichtung dieses Transportbandes quergefaltet wird.

4. Verfahren nach einem der vorhergehenden Ansprüche, **dadurch gekennzeichnet, dass** das gefaltete Teigband in der mindestens einen Walzvorrichtung (5) auf eine abschließende Teigstärke von 2 bis 20 mm, bevorzugt 2 bis 10 mm gewalzt wird.

5. Verfahren nach einem der vorhergehenden Ansprüche, **dadurch gekennzeichnet, dass** der Schritt f) des Schneidens des Teigbandes zur Herstellung von Buns folgende Unterschritte umfasst:
f1) Längsschneiden des Teigbandes in eine Anzahl von schmalen Teigbändern, (6a);
f2) Einrollen des Teigbandes, insbesondere der schmalen Teigbänder (6b); und
f3) Querschneiden der eingerollten Teigbänder in eine Anzahl von Teiglingen (6c).

6. Verfahren nach Anspruch 5, **dadurch gekennzeichnet, dass** die geschnittenen Teiglinge in einem weiteren Schritt f4) auf ein weiteres Transportband überführt werden, wobei auf dem Transportband in einem Winkel zur Laufrichtung des Transportbandes Wirkkanäle ausgebildet sind, wobei eine Rundformung der Teiglinge in den Wirkkanälen bewirkt wird.

7. Verfahren nach Anspruch 6, **dadurch gekennzeichnet, dass** die Wirkkanäle auf einem Transportband in einem Winkel zur Laufrichtung des Transportbandes Wirkkanäle (7) ausgebildet sind.

8. Verfahren nach einem der Ansprüche 6 bis 7, **dadurch gekennzeichnet, dass** die Dicke der die Wirkkanäle verlassenen rundgeformten Teiglinge reduziert wird (Schritt h1).

9. Verfahren nach einem der Ansprüche 1-4, **dadurch gekennzeichnet, dass** für die Herstellung von Hot-Dog Brötchen der Schritt f) des Schneidens des Teigbandes folgende Unterschritte umfasst:
f1) Längsschneiden des Teigbandes in eine Anzahl von schmalen Teigbändern, (6a); und
f3) Querschneiden der-Teigbänder in eine Anzahl von Teiglingen (6c).

10. Verfahren nach einem der vorhergehenden Ansprüche, **dadurch gekennzeichnet, dass** die Gärtemperatur in Schritt i) zwischen 30 und 35°C, bevorzugt zwischen 32 und 34°C und die Gärzeit zwischen 30 und 120 min, bevorzugt 45 und 115 min, insbesondere bevorzugt zwischen 50 und 100 min beträgt.

11. Verfahren nach einem der vorhergehenden Ansprüche, **dadurch gekennzeichnet, dass** die Teiglinge nach dem Gären mit Saaten bestreut werden und/oder mit Proteinmischungen besprüht werden (Schritt i2).

12. Verfahren nach einem der vorhergehenden Ansprüche, **dadurch gekennzeichnet, dass** die Teiglinge bei Temperaturen zwischen 150 und 250°C, bevorzugt 180 und 240°C, insbesondere bevorzugt zwischen 200 und 220°C gebacken werden.

13. Verfahren nach einem der vorhergehenden Ansprüche, **dadurch gekennzeichnet, dass** die Backzeit zwischen 5 und 35 min, bevorzugt zwischen 6 und 30 min, insbesondere bevorzugt zwischen 7 und 15 min, ganz besonders bevorzugt zwischen 8 und 12 min, min in Abhängigkeit des zu backenden Teiges und/oder Teiggewichts beträgt.

14. Verfahren nach einem der vorhergehenden Ansprüche, **dadurch gekennzeichnet, dass** der zum Backen verwendete Backofen über mehrere Backzonen mit mindestens vier Wärmeübertragungsvarianten, insbesondere Leitung, Konvektion, Strahlung und Kondensation, verfügt und mit unterschiedlichen Auslastungsgraden betrieben werden kann.

15. Anlage zur Durchführung eines Verfahrens nach einem der vorhergehenden Ansprüche umfassend
- mindestens eine Knetvorrichtung (1) zur Herstellung eines Teiges,
- mindestens ein Depolymerisator (2) umfassend mindestens eine Förderschnecke und mindestens eine Exenterschneckenpumpe zur Depolymerisation des Teiges;
- mindestens ein Teigbandformer (3) zur Ausbildung eines Teigbandes;
- mindestens ein Transportband zur Überführung des Teigbandes auf ein nächstes Transportband, wobei das Teigband gefaltet wird;
- mindestens eine Walzvorrichtung (5) zur Reduzierung der Teigstärke des gefalteten Teigbandes;
- mindestens eine Schneidvorrichtung (6) zum Schneiden des Teigbandes in eine Anzahl von Teiglingen,
- optional mindestens ein weiteres Transportband mit an dem Transportband vorgesehenen Wirkkanälen (7);
- mindestens eine Vorrichtung zum Bestücken von Backblechen und/oder Backformen mit den geformten Teiglingen (9),
- mindestens eine Gärvorrichtung, und
- mindestens einen Backofen (12) zum Backen der Teiglinge.

## Claims

1. Method for the continuous production of bakery products, especially bakery products composed of wheat doughs, comprising the steps of:
a) producing at least one dough in at least one kneading device (1);
b) introducing the at least one dough from the kneading device (1) into at least one depolymerizer (2) comprising at least one conveying worm and at least one eccentric worm pump for depolymerizing and degassing the dough; through use of enzymes, more particularly a glucose oxidase, the gluten network is regenerated after the depolymerization in the course of further processing, and the shearing forces are adapted to the flour grade through differential shearing in the depolymerizer;
c) introducing the depolymerized dough into at least one dough strip former (3) to form a dough strip;
d) folding the dough strip (4);
e) guiding the folded dough strip into at least one rolling device (5);
f) cutting the dough strip (6) using at least one cutting device into a number of dough portions;
g) optionally flat-rolling the dough portions;
h) depositing the formed dough portions onto baking sheets or into baking moulds (9);
i) fermenting the dough portions (10); and
j) baking the dough portions (12).

2. Method according to Claim 1, **characterized in that** in step c) the dough departing the at least one depolymerizer (2) is conveyed into the at least one dough strip former (3) via a pipe conduit into the hopper of the dough strip former and the dough strip formed is applied to a conveyor belt.

3. Method according to either of the preceding claims, **characterized in that** the dough strip for folding in step d) is cross-folded onto a further conveyor belt, which is arranged at right angles to the conveyor belt transporting the dough strip, in the running direction of this further conveyor belt.

4. Method according to any of the preceding claims, **characterized in that** the folded dough strip is rolled in the at least one rolling device (5) to a final dough thickness of 2 to 20 mm, preferably 2 to 10 mm.

5. Method according to any of the preceding claims, **characterized in that** the step f) of cutting the dough strip to produce buns comprises the following sub-steps:
f1) longitudinally cutting the dough strip into a number of narrow dough strips, (6a);
f2) rolling up the dough strip, more particularly the narrow dough strips (6b); and
f3) cross-cutting the rolled-up dough strips into a number of dough portions (6c).

6. Method according to Claim 5, **characterized in that** in a further step f4) the cut dough portions are transferred onto a further conveyor belt, the conveyor belt having effect channels, formed at an angle to the running direction of the conveyor belt, where the dough portions are rounded in the effect channels.

7. Method according to Claim 6, **characterized in that** the effect channels are effect channels (7) formed on a conveyor belt at an angle to the running direction of the conveyor belt.

8. Method according to either of Claims 6 and 7, **characterized in that** the thickness of the rounded dough portions departing the effect channels is reduced (step h1).

9. Method according to any of Claims 1-4, **characterized in that** for the production of hot-dog buns, the step f) of cutting the dough strip comprises the following sub-steps:
f1) longitudinally cutting the dough strip into a number of narrow dough strips, (6a); and
f3) cross-cutting the dough strips into a number of dough portions (6c).

10. Method according to any of the preceding claims, **characterized in that** the fermenting temperature in step i) is between 30 and 35°C, preferably between 32 and 34°C and the fermenting time is between 30 and 120 min, preferably 45 and 115 min, especially preferably between 50 and 100 min.

11. Method according to any of the preceding claims, **characterized in that** after the fermenting the dough portions are sprinkled with seeds and/or sprayed with protein mixtures (step i2).

12. Method according to any of the preceding claims, **characterized in that** the dough portions are baked at temperatures between 150 and 250°C, preferably 180 and 240°C, especially preferably between 200 and 220°C.

13. Method according to any of the preceding claims, **characterized in that** the baking time is between 5 and 35 min, preferably between 6 and 30 min, especially preferably between 7 and 15 min, with very particular preference between 8 and 12 min, depending on the dough weight and/or dough for baking.

14. Method according to any of the preceding claims, **characterized in that** the baking oven used for baking possesses a plurality of baking zones featuring at least four heat transfer variants, especially conduction, convection, radiation and condensation, and can be operated with different degrees of capacity utilization.

15. System for implementing a method according to any of the preceding claims, comprising
- at least one kneading device (1) for producing a dough;
- at least one depolymerizer (2) comprising at least one conveying worm and at least one eccentric worm pump for depolymerizing the dough;
- at least one dough strip former (3) for forming a dough strip;
- at least one conveyor belt for transferring the dough strip to a subsequent conveyor belt, where the dough strip is folded;
- at least one rolling device (5) for reducing the dough thickness of the folded dough strip;
- at least one cutting device (6) for cutting the dough strip into a number of dough portions;
- optionally at least one further conveyor belt having effect channels (7) provided on the conveyor belt;
- at least one device for populating baking sheets and/or baking moulds with the formed dough portions (9);
- at least one fermenting device; and
- at least one baking oven (12) for baking the dough portions.

## Revendications

1. Procédé de préparation continue de produits de boulangerie, en particulier de produits de boulangerie à base de pâtes de blé, comprenant les étapes consistant à :
a) préparer au moins une pâte dans au moins un dispositif de pétrissage (1) ;
b) introduire ladite au moins une pâte du dispositif de pétrissage (1) dans au moins un dépolymérisateur (2) comprenant au moins une vis sans fin et au moins une pompe à vis sans fin excentrique pour la dépolymérisation et le dégazage de la pâte ; dans lequel la mise en œuvre d'enzymes, en particulier d'une glucose oxydase, entraîne une régénération du réseau de gluten après la dépolymérisation pendant la suite de la transformation, et dans lequel les forces de cisaillement de la qualité de farine sont adaptées par un cisaillement différent dans le dépolymérisateur ;
c) introduire la pâte dépolymérisée dans au moins un dispositif de mise en forme de bande de pâte (3) tout en formant une bande de pâte ;
d) plier la bande de pâte (4) ;
e) introduire la bande de pâte pliée dans au moins un dispositif de laminage (5),
f) découper la bande de pâte (6) en un certain nombre de pâtons en utilisant au moins un dispositif de coupe ;
g) en option aplatir les pâtons ;
h) déposer les pâtons mis en forme sur des plaques de cuisson ou dans des moules de cuisson (9) ;
i) laisser fermenter les pâtons (10) ; et
j) faire cuire les pâtons (12).

2. Procédé selon la revendication 1, **caractérisé en ce qu'**à l'étape c) la pâte quittant ledit au moins un dépolymérisateur (2) est transportée dans ledit au moins un dispositif de mise en forme de bande de pâte (3) par l'intermédiaire d'une conduite dans l'entonnoir du dispositif de mise en forme de bande de pâte, et la bande de pâte formée est chargée sur une bande transporteuse.

3. Procédé selon l'une quelconque des revendications précédentes, **caractérisé en ce que** pour le pliage à l'étape d), la bande de pâte est pliée transversalement sur une autre bande transporteuse disposée perpendiculairement à la bande transporteuse transportant la bande de pâte, dans le sens de la marche de ladite bande transporteuse.

4. Procédé selon l'une quelconque des revendications précédentes, **caractérisé en ce que** la bande de pâte pliée est laminée dans ledit au moins un dispositif de laminage (5) jusqu'à une épaisseur de pâte finale de 2 à 20 mm, de préférence de 2 à 10 mm.

5. Procédé selon l'une quelconque des revendications précédentes, **caractérisé en ce que** l'étape f) consistant à découper la bande de pâte pour la préparation de buns comprend les sous-étapes suivantes consistant à :
f1) découper longitudinalement la bande de pâte en un certain nombre de bandes de pâte étroites, (6a) ;
f2) enrouler la bande de pâte, en particulier les bandes de pâte étroites, (6b) ; et
f3) découper transversalement les bandes de pâte enroulées en un certain nombre de pâtons, (6c).

6. Procédé selon la revendication 5, **caractérisé en ce que** dans une autre étape f4) les pâtons découpés sont transférés sur une autre bande transporteuse, dans lequel des canaux de façonnage sont réalisés sur la bande transporteuse selon un angle par rapport au sens de la marche de la bande transporteuse, une mise en forme ronde des pâtons étant provoquée dans les canaux de façonnage.

7. Procédé selon la revendication 6, **caractérisé en ce que** les canaux de façonnage sont des canaux de façonnage (7) réalisés sur une bande transporteuse selon un angle par rapport au sens de la marche de la bande transporteuse.

8. Procédé selon l'une quelconque des revendications 6 à 7, **caractérisé en ce que** l'épaisseur des pâtons mis en forme ronde et quittant les canaux de façonnage est réduite (étape h1).

9. Procédé selon l'une quelconque des revendications 1 à 4, **caractérisé en ce que** pour la préparation de pains à hot-dog, l'étape f) consistant à découper la bande de pâte comprend les sous-étapes suivantes consistant à :
f1) découper longitudinalement la bande de pâte en un certain nombre de bandes de pâte étroites, (6a) ; et
f3) découper transversalement les bandes de pâte en un certain nombre de pâtons (6c).

10. Procédé selon l'une quelconque des revendications précédentes, **caractérisé en ce que** la température de fermentation à l'étape i) est comprise entre 30 et 35 °C, de préférence entre 32 et 34 °C, et le temps de fermentation est compris entre 30 et 120 min, de préférence entre 45 et 115 min, de manière particulièrement préférée entre 50 et 100 min.

11. Procédé selon l'une quelconque des revendications précédentes, **caractérisé en ce qu'**après la fermentation, les pâtons sont parsemés de graines et/ou sont aspergés de mélanges de protéines (étape i2).

12. Procédé selon l'une quelconque des revendications précédentes, **caractérisé en ce que** les pâtons sont cuits à des températures comprises entre 150 et 250 °C, de préférence entre 180 et 240 °C, de manière particulièrement préférée entre 200 et 220 °C.

13. Procédé selon l'une quelconque des revendications précédentes, **caractérisé en ce que** le temps de cuisson est compris entre 5 et 35 min, de préférence entre 6 et 30 min, de manière particulièrement préférée entre 7 et 15 min, de manière tout particulièrement préférée entre 8 et 12 min, en fonction de la pâte à faire cuire et/ou du poids de la pâte.

14. Procédé selon l'une quelconque des revendications précédentes, **caractérisé en ce que** le four utilisé pour la cuisson dispose de plusieurs zones de cuisson avec au moins quatre variantes de transmission de chaleur, en particulier par conduction, par convection, par rayonnement et par condensation, et peut fonctionner avec différents taux d'utilisation.

15. Installation permettant d'exécuter un procédé selon l'une quelconque des revendications précédentes, comprenant
- au moins un dispositif de pétrissage (1) pour la préparation d'une pâte,
- au moins un dépolymérisateur (2) comprenant au moins une vis sans fin et au moins une pompe à vis sans fin excentrique pour la dépolymérisation de la pâte ;
- au moins un dispositif de mise en forme de bande de pâte (3) pour former une bande de pâte ;
- au moins une bande transporteuse pour le transfert de la bande de pâte sur une bande transporteuse suivante, la bande de pâte étant pliée ;
- au moins un dispositif de laminage (5) pour réduire l'épaisseur de pâte de la bande de pâte pliée ;
- au moins un dispositif de coupe (6) pour découper la bande de pâte en un certain nombre de pâtons,
- en option au moins une autre bande transporteuse avec des canaux de façonnage (7) prévus sur la bande transporteuse ;
- au moins un dispositif pour garnir des plaques de cuisson et/ou des moules de cuisson avec les pâtons formés (9),
- au moins un dispositif de fermentation, et
- au moins un four (12) pour cuire les pâtons.
